(19) **Europäisches Patentamt**

**European Patent Office**

**Office européen des brevets**

(11) **EP 1 679 922 A1**

(12) **EUROPEAN PATENT APPLICATION**
published in accordance with Art. 158(3) EPC

(43) Date of publication:
**12.07.2006 Bulletin 2006/28**

(51) Int Cl.:
*H04Q 7/38* (1995.01)

(21) Application number: **03769978.2**

(22) Date of filing: **29.10.2003**

(86) International application number:
**PCT/JP2003/013871**

(87) International publication number:
**WO 2005/041610 (06.05.2005 Gazette 2005/18)**

(84) Designated Contracting States:
**DE FR GB**

(71) Applicant: **FUJITSU LIMITED**
**Kawasaki-shi,**
**Kanagawa 211-8588 (JP)**

(72) Inventor: **NAKANO, Hirofumi**
**Kawasaki-shi,**
**Kanagawa 211-8588 (JP)**

(74) Representative: **Sunderland, James Harry et al**
**Haseltine Lake,**
**Imperial House,**
**15-19 Kingsway**
**London, WC 2W 6UD (GB)**

(54) **RADIO UNIT**

(57)    The present invention relates to a radio apparatus encrypts transmission information to be radio-transmitted at a radio station or decrypts transmission information received through a radio transmission path. The object of the present invention is to securely encrypt, for transmission, information containing information. Thus, the radio apparatus according to the present invention includes an encryption object identifying unit which identifies from transmission information a portion whose contents and/or attributes that satisfy predetermined conditions, and a transmitting unit which encrypts the identified portion of the transmission information or information containing the identified portion and which radio-transmits the encryption result.

F I G. 1

**Description**

*TECHNICAL FIELD*

The present invention relates to a radio apparatus which encrypts transmission information to be radio-transmitted or decrypts transmission information received through a radio transmission path at a radio station as a component of a radio communication system or a radio transmission system.

*TECHNOLOGICAL BACKGROUND*

In recent years, wide band CDMA (Code Division Multiplex Access) system (hereinafter, referred to as W-CDMA) that can accomplish radio transmission for not only sound, but various types of information such as images at low cost has been actively and multi-laterally studied and developed.

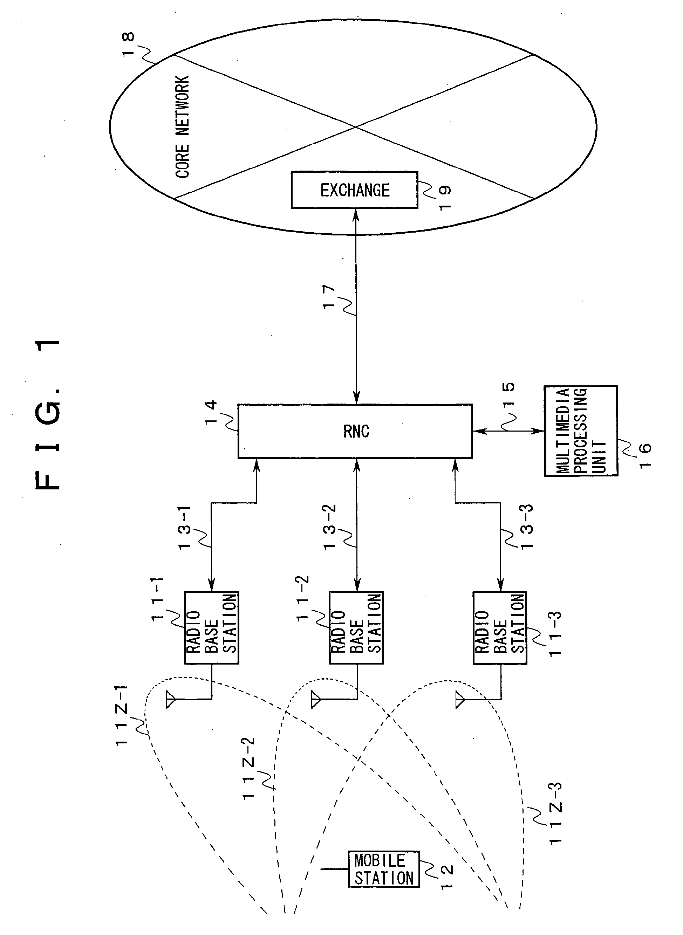

Fig. 1 is a schematic diagram showing an example of a structure of a mobile communication system to which W-CDMA is applied.

In the figure, a mobile station 12 is located in an area corresponding to all or a part of wireless zones 11Z-1 to 11 Z-3 discretely formed by radio base stations 11-1 to 11-3, respectively. These radio base stations 11-1 to 11-3 are connected to a radio network controlling unit (RNC) 14 through communication links 13-1 to 13-3, respectively. The radio network controlling unit 14 is connected to a multimedia processing unit 16 through a communication link 15. In addition, the radio network controlling unit 14 is connected to an exchange 19 disposed as a node in a core network 18 through a communication link 17.

Next, basic operations of individual units of such a radio communication system will be described.

The mobile station 1 2 radio-transmits desired transmission information to all or a part of the radio base stations 11-1 to 11-3 through a radio channel allocated to the mobile station 12 under channel control (in this example, for simplicity, it is assumed that the number of radio channels allocated to the mobile station 12 is one).

These radio base stations 11-1 to 11-3 each convert the foregoing transmission information into an ATM (Asynchronous Transfer Mode) cell sequence having a predetermined format and transmit the ATM cell sequence to the radio network controlling unit 14 through the communication links 13-1 to 13-3, respectively.

The radio network controlling unit 14 has the following functions and transfers the ATM cell sequence to the exchange 19 through the communication link 1 7 in association with the multimedia processing unit 16.

-    ATM switching
-    Control signal processing
-    O&M
-    Common channel demultiplexing
-    Diversity hand-over

In addition, the radio network controlling unit 14 charges the mobile station 12 for a completed call that occurred therein according to connection duration basis charging method or packet basis charging method that will be described later.

(Connection Duration Basis Charging Method)

In this method, the radio network controlling unit 14 computes a charging amount as a product of a connection duration of the completed call and charge per unit time that depends on the type of the completed call regardless of whether transmission information has been actually transmitted.

(Packet Basis Charging Method)

In this method, the radio network controlling unit 14 computes a charging amount as a product of a charge per packet that has been set by a vendor or the like and that contains any valid transmission information (hereinafter this charge is hereinafter referred to as a packet basis charging rate) regardless of the foregoing connection duration and the number of packets that contain any valid and categorized transmission information and that have been actually transmitted.

In the foregoing related art, when the connection duration basis charging method is applied, the following inadequate problems occur and service quality is not sufficiently secured.

-    The mobile station 12 is equally charged for a duration in which transmission information (packets) is not transmitted. Thus, while the transmission rate drops temporarily or regularly due to an insufficient radio resource or other factors, the mobile station 12 is charged for the duration at the same charging rate as the mobile station 1 2 is charged for the duration for which the transmission rate does not drop.
-    Although the rate of mobile stations that access the Internet is increasing and the contents and sizes of transmission information that the mobile stations transmit are diversifying, countermeasures have not been adequately taken. In addition, these countermeasures have restrictions.

As related art references with respect to the foregoing charges, the following patent documents 2, 3, 6, and so forth have been disclosed.

In addition, information that mobile stations transmit and receive may contain information to be kept secret from others. In this case, when a mobile station has an encryption function (refer to the following patent document 7), the mobile station can cryptically communicate with others.

However, if all information that a mobile station will transmit and receive is highly encrypted, information will be transmitted and received with a delay due to the encryption processing time and so forth and a load of a terminal will increase. On the other hand, when the user turns on and off the cryptic communication, if he or she mistakes the operation, information to be encrypted may be carelessly transmitted.

[Patent Document 1]
Japanese Patent Application Unexamined Publication No. HEI 11-177732 (claim 1, Fig. 3)
[Patent Document 2]
Japanese Patent Application Unexamined Publication No. HEI 7-31 2655 (claim 2)
[Patent Document 3]
Japanese Patent Application Unexamined Publication No. 2000-152337 (claim 1)
[Patent Document 4]
Japanese Patent Application Unexamined Publication No. HEI 8-14931 7 (Claim 2)
[Patent Document 5]
Japanese Patent Application Unexamined Publication No. 2003-161996 (Claims 1, 4)
[Patent Document 6]
Japanese Patent Application Unexamined Publication No. 2001 -245127 (Claim 2)
[Patent Document 7]
Japanese Patent Application Unexamined Publication No. 2001-223685 (Claim 1)

*DISCLOSURE OF THE INVENTION*

An object of the present invention is to securely encrypt, for transmission, information as an object of encryption.

Another object of the present invention is to provide a radio apparatus that can flexibly deal with various types of contents and attributes and various ways of transmission of transmission information and that realizes an appropriate charging system at low cost.

Another object of the present invention is to properly allocate to and share with a plurality of calls and communication sessions hardware and other resources used at a receiving end that decrypts information according to an encryption system, without allocating them to a particular call or communication session for a long time.

Another object of the present invention is to simplify the structure of the radio apparatus and shorten transmission delay in comparison with a case that information not to be encrypted and a decryption result are separately radio-transmitted.

Another object of the present invention is to achieve desired secrecy, transmission quality, and transmission rate regardless of contents and attributes of information to be encrypted in comparison with a case that a fixed encryption system is applied.

Another object of the present invention is to simplify an encryption process without trading off secrecy.

Another object of the present invention is to flexibly deal with various contents and attributes of transmission information and to maintain high transmission quality.

Another object of the present invention is to automatically limit an increase of a charging amount due to the encryption, even when mostly encrypted transformation information is radio-transmitted.

Another object of the present invention is to properly limit an increase of a charging amount due to the encryption, even when mostly encrypted transmission information of various types of contents and attributes is radio-transmitted.

Another object of the present invention is to set a limitation of a charging amount at a transmitting end and a receiving end of transmission information under various function and load distributions.

Another object of the present invention is to prevent a change of an encryption system and a change of a charging system from affecting a structure of an access network, when the encryption system in a radio transmission zone and the charging system suitable for the encryption system have changed.

Another object of the present invention is to secure compatibility of the radio apparatus with the core network without a change of the basic structure thereof.

Another object of the present invention is to properly set a charging amount according to encryption unique to a radio transmission zone under various function and load distributions between a transmitting end and a receiving end.

Another object of the present invention is to reduce the cost of a radio communication system and a radio transmission system to which the present invention is applied and to improve service quality thereof.

The foregoing objects can be accomplished by a radio apparatus which identifies from transmission information a portion whose content and/or attribute that satisfies predetermined conditions. The radio apparatus encrypts the identified portion of the transmission information or information containing the identified portion and radio-transmits the encryption result. The rest of portions of information are not encrypted. The radio apparatus encrypts, for radio transmission, only the portion of the transmission information satisfying the foregoing conditions or information that contains the portion.

In addition, the foregoing objects can be accomplished by the radio apparatus which radio-transmits transmission information other than the portion or information containing the portion along with the encryption result. The radio apparatus radio-transmits information not to be encrypted along with the encryption result.

In addition, the foregoing objects can be accomplished by the radio apparatus which applies an encryption system for each of the conditions. The radio apparatus encrypts individual items of information to be encrypted according to encryption systems appropriate for conditions that hold for the items of information.

In addition, the foregoing objects can be accomplished by the radio apparatus which applies a same encryption system satisfying each of the predetermined conditions and accomplishes maximum secrecy. The radio apparatus encrypts information according to a single encryption system that secures desired secrecy, regardless of the contents and attributes of the information even if the amount of information to be encrypted is large.

In addition, the foregoing objects can be accomplished by the radio apparatus which radio-transmits the encryption result as a packet sequence containing information used for identifying a decryption system appropriate for the encryption system. In the radio apparatus, a receiving end that receives the packet sequence can restore transmission information from the packet sequence with high accuracy even if there are many applicable encryption systems.

In addition, the foregoing objects can be accomplished by the radio apparatus which man-machine interfaces to set the predetermined conditions. The radio apparatus according to the present invention designates information to be encrypted contained in transmission information, in accordance with the intention of an operator of the radio apparatus.

In addition, the foregoing objects can be accomplished by the radio apparatus obtains one of a charging system and an extra charge of a charging rate. The charging system is for transmitting transformation information or a portion of the transformation information whose content and/or attribute satisfies the predetermined conditions or a set of information containing the portion which is radio-transmitted from a receiving end receiving the encryption result, and the charging rate is applied for radio-transmitting the portion or a set of portions according to the charging system. Moreover, the radio apparatus computes a charging amount for the radio transmission according to the charging system or extra charge and to the contents and/or attributes of the transmission information, and radio-transmits the transmission information instead of the encryption result when the charging amount exceeds a predetermined upper limit value.

When the charging amount for encrypting information exceeds the upper limit value, the radio apparatus radio-transmits the transmission information without encrypting it.

In addition, the foregoing objects can be accomplished by the radio apparatus which man-machine interfaces to notify the charging amount and designate a permission/non-permission of the encryption at the charging amount. When the encryption is not permitted, it radio-transmits the transmission information instead of the encryption result.

With the radio apparatus, it is possible to appropriately set an upper limit value of a charging amount for encrypting information within a range decided by the operator.

In addition, the foregoing objects can be accomplished by the radio apparatus which, when the charging amount exceeds the predetermined upper limit, transmits a response indicating the charging amount's exceeding to the radio transmission path. A receiving end that receives radio-transmitted information partly or wholly encrypted sets a limitation of the charging amount in association with the radio apparatus according to the present invention.

In addition, the foregoing objects can be accomplished by the radio apparatus which, when the encryption is not permitted, transmits a response indicating the non-permission of the encryption to the radio transmission path. A receiving end that receives radio-transmitted information partly or wholly encrypted sets a limitation of the charging amount in association with the radio apparatus according to the present invention.

In addition, the foregoing objects can be accomplished by the radio apparatus which receives a packet sequence through a radio transmission path having containing information placed in a payload and entirely or partially encrypted. The packet sequence is able to contain additional information applied for decryption of the information. The radio apparatus restores transmission information contained in the packet sequence and transfers charging information to a core network along with the transmission information. The charging information is higher than the sum of products of a ratio of the encrypted charging information and an extra charge of a charging rate appropriate for an applied encryption system.

Even when receiving transmission information encrypted in various modes and radio-transmitted from a transmitting end, the radio apparatus can prevent a change in the internetwork interface with a core network as long as an extra charge complies with a charging system of the core network.

In addition, the foregoing objects can be accomplished by the radio apparatus which obtains the charging information and the charging rate according to a charging system in conformity with the core network. Moreover, even when all or part of transmission information is encrypted and radio-transmitted, the radio apparatus charges for the radio transmission in conformity with the charging system of the core network.

In addition, the foregoing objects can be accomplished by the radio apparatus which transmits the charging system or the extra charge of the charging rate to a transmitting end transmitting the packet sequence, and cancels the extra charge when receiving a response to the charging system or the extra charge of the charging rate transmitted from the transmitting end. Moreover, the radio apparatus appropriately prevents an increase of the charging amount for encryption and radio-transmission of transmission information in association with the transmitting end.

The summary of the present invention is as follows.

A first radio apparatus according to the present invention has an encryption object identifying unit and a transmitting unit. The encryption object identifying unit identifies from transmission information a portion whose content and/or attribute which satisfies predetermined conditions. The transmitting unit encrypts the identified portion of the transmission information or information containing the identified portion and radio-transmits the encryption result.

In other words, the portion which satisfies the foregoing conditions or information which contains the portion are encrypted and radio-transmitted. Thus, when the transmission information contains secret information, it can be identified and securely encrypted. Also, there is another merit of properly allocating to and sharing with a plurality of calls and communication sessions hardware and other resources used at a receiving end that decrypts information according to an encryption system, without allocating them to a particular call or communication session for a long time.

In a second radio apparatus according to the present invention, the transmitting unit radio-transmits, along with the encryption result, a rest of the transformation information other than the portion whose content and/or attribute which satisfies predetermined conditions or information containing the portion. In other words, of transmission information, information not to be encrypted is radio-transmitted along with an encryption result. Thus, it is possible to simplify the structure of the radio apparatus and shorten transmission delay in comparison with a case that information not to be encrypted and a decryption result are separately radio-transmitted.

In a third radio apparatus according to the present invention, the transmitting unit applies, for the encryption, an encryption system appropriate for each of the conditions. In other words, individual items of information to be encrypted are encrypted according to encryption systems appropriate for conditions that hold for the items of information. Thus, it is possible to achieve desired secrecy, transmission quality, and transmission rate regardless of contents and attributes of information to be encrypted in comparison with the case that a fixed encryption system is applied.

In a fourth radio apparatus according to the present invention, the transmitting unit applies, for the encryption, a same encryption system which satisfies each of the predetermined conditions and accomplishes maximum secrecy. In other words, information is encrypted according to a single encryption system that secures desired secrecy, regardless of the contents and attributes of the information even if the amount of information to be encrypted is large. Thus, the encryption process is simplified without trading off secrecy.

In a fifth radio apparatus according to the present invention, the transmitting unit radio-transmits the encryption result as a packet sequence containing information used for identifying a decryption system appropriate for the encryption system. In other words, in this radio apparatus, a receiving end that receives the packet sequence can restore transmission information from the packet sequence with high accuracy even if there are many applicable encryption systems. Thus, various contents and attributes of transmission information can be flexibly handled and high transmission quality can be maintained.

A sixth radio apparatus according to the present invention further has a man-machine interface unit which man-machine interfaces to set the predetermined conditions. That is, the radio apparatus according to the present invention can designate information contained in transmission information as an object of encryption, in accordance with the intention of an operator of the radio apparatus. Thus, the radio apparatus can handle various contents and attributes of transmission information and maintain high transmission quality.

A seventh radio apparatus according to the present invention further has a charging information obtaining unit and a charging amount computing unit. The charging information obtaining unit obtains one of a charging system and an extra charge of a charging rate. The charging information is for transmitting the portion or the information containing the portion which is radio-transmitted from a receiving end receiving the encryption result, and the charging rate is applied for radio-transmitting the portion or a set of portions according to the charging system. The charging amount computing unit computes a charging amount for the radio transmission according to the charging system or the extra charge and to the contents and/or attributes of the transmission information. The transmitting unit radio-transmits the transmission information instead of the encryption result when the charging amount exceeds a predetermined upper limit value.

That is, the transmission information is radio-transmitted without being encrypted when the charging amount for encrypting and radio transmitting information exceeds the upper limit value. Accordingly, it is possible to automatically limit an increase of a charging amount due to the encryption, even when mostly encrypted transformation information is radio-transmitted as long as the foregoing upper limit value is properly set.

An eighth radio apparatus according to the present invention further has an encryption permission designating unit which man-machine interfaces to notify the charging amount and designate permission/non-permission of the encryption at the charging amount. When the encryption is not permitted, the transmitting unit radio-transmits the transmission information instead of the encryption result. In other words, the radio apparatus can set an upper limit value of a charging amount for encrypting and radio-transmitting information in a range decided by the operator. Thus, it is possible to properly limit an increase of a charging amount for the encryption, even when radio-transmitting mostly encrypted transmission information of various types of contents and attributes.

In a ninth radio apparatus according to the present invention, the charging amount exceeds the predetermined upper limit value, the transmitting unit transmits a response indicating the charging amount's exceeding to the radio transmission path. In other words, a receiving end receiving radio-transmitted information that has been partly or wholly encrypted can set a limitation of the charging amount in association with the radio apparatus according to the present invention. Thus, it is possible to set a limitation of a charging amount at a transmitting end and a receiving end of transmission information under various function and load distributions.

In a tenth radio apparatus according to the present invention, when the encryption is not permitted, the transmitting unit transmits a response indicating the non-permission to the radio transmission path. In other words, a receiving end receiving radio-transmitted information partly or wholly encrypted can set a limitation of the charging amount in association with the radio apparatus according to the present invention. Thus, it is possible to set a limitation of a charging amount at a transmitting end and a receiving end of transmission information under various function and load distributions.

An eleventh radio apparatus according to the present invention has a receiving unit and an internetwork interfacing unit. The receiving unit receives a packet sequence through a radio transmission path having information placed in a payload and encrypted entirely or partially. The packet sequence is able to contain additional information applied for decryption of the information. The internetwork interfacing unit restores transmission information contained in the packet sequence and transfers charging information to a core network along with the transmission information. The charging information is higher than the sum of products of a ratio of the encrypted information and an extra charge of a charging rate according to an applied encryption system.

That is, even when receiving transmission information encrypted in various modes and radio-transmitted from a transmitting end, the radio apparatus can prevent a change in the internetwork interface with a core network as long as an extra charge complies with a charging system of the core network. Thus, it is possible to prevent a change of an encryption system and a change of a charging system from affecting a structure of an access network, when the encryption system in a radio transmission zone and the charging system suitable for the encryption system have changed.

In a twelfth radio apparatus according to the present invention, the internetwork interfacing unit obtains the charging information and the charging rate according to a charging system in conformity with the core network. In other words, even when all or part of transmission information is encrypted for radio-transmission, it is possible to charge for the radio transmission in conformity with the core network. Therefore, it is possible to secure compatibility of the radio apparatus with the core network without a change of the basic structure thereof, as long as the foregoing charging system is identified.

A thirteenth radio apparatus according to the present invention further has an informing unit which radio-transmits the charging system or the extra charge of the charging rate to a transmitting end which transmits the packet sequence. The internetwork interfacing unit cancels the extra charge when receiving a response to the radio-transmitted charging system or extra charge of the charging rate. The response is transmitted from the transmitting end through the receiving unit. In other words, the radio apparatus can prevent an increase of the charging amount for encryption and radio-transmission of transmission information in association with the transmitting end.

*BRIEF DESCRIPTION OF DRAWINGS*

Fig. 1 is a schematic diagram showing an example of a structure of a mobile communication system to which W-CDMA is applied.
Fig. 2 is a schematic diagram describing operations of a first embodiment and a second embodiment of the present invention.
Fig. 3 is a flow chart showing an operation of a mobile station according to the first embodiment of the present invention.
Fig. 4 is a flow chart showing operations of a radio network controlling unit and a multimedia processing unit according to the first embodiment of the present invention.
Fig. 5 is a schematic diagram showing a form of a man-machine interface that the mobile station has.
Fig. 6 is a schematic diagram showing protocol stacks of individual units.
Fig. 7 is a schematic diagram showing structures of packets that are radio-transmitted.

*BEST MODE FOR CARRYNG OUT THE INVENTION*

Next, with reference to the accompanying drawings, embodiments of the present invention will be described in detail.

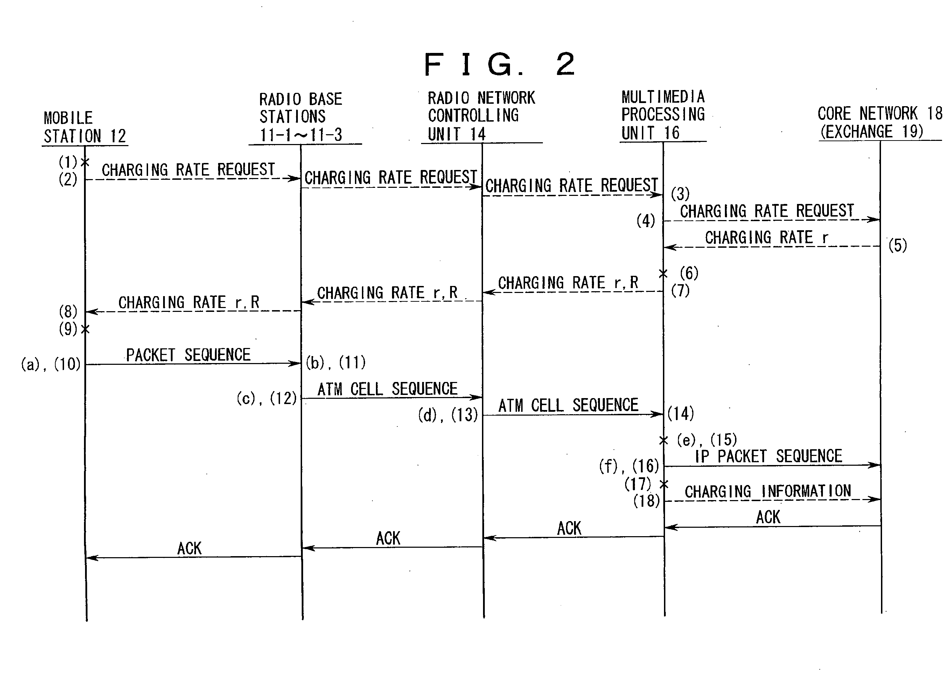

Fig. 2 is a schematic diagram describing operations of a first embodiment and a second embodiment of the present invention.

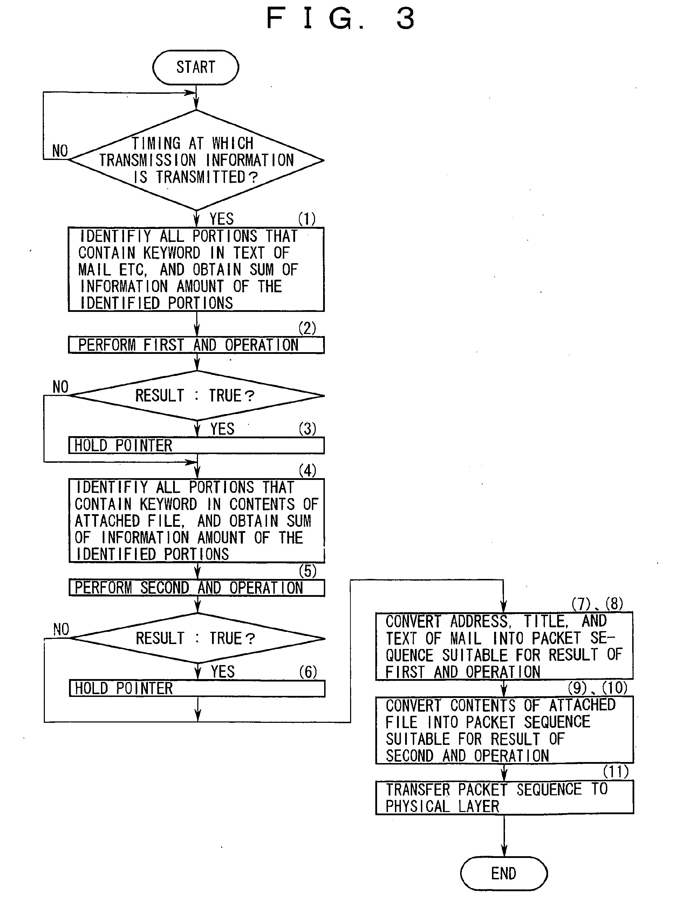

Fig. 3 is a flow chart showing an operation of a mobile station according to the first embodiment of the present invention.

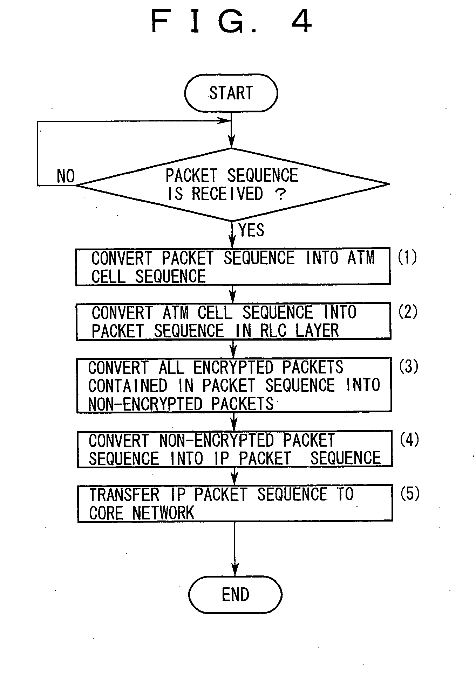

Fig. 4 is a flow chart showing an operation of a radio network controlling unit according to the first embodiment of the present invention. [First Embodiment]

Next, with reference to Fig. 1 to Fig. 4, the operation of the first embodiment will be described.

This embodiment features the following processes that a mobile station 12, a radio network controlling unit 14, and a multimedia processing unit 16 perform.

The mobile station 12 has a register in which the following information is preset or the following information is set under a first man-machine interface that will be described later.

(1) Contents of mail that is transmitted (not limited to text, but an attached file is excluded, that will be described later),

- Keyword KW_mail representing information that needs to be kept secret based on encryption (for example, a sequence of characters and symbols that may contain a wildcard, which represents any character or symbol, and a regular expression in a predetermined format),
- Upper limit value UL_mail and/or lower limit value LL_mail of the sum of information amount that needs to be kept secret based on encryption in information contained in the text,
- Mail address ADRS_mail representing an address of mail that needs to be kept secret based on encryption,
- Time zone P_mail in which mail needs to be encrypted
- Address URL_mail of a website that needs to be encrypted because mail is accessed when it is transmitted

(2) Files that may be attached to mail that is transmitted

- All formats (extensions) TYP_fi!e of files that need to be kept secret based on encryption
- Upper limit value UL_file and/or lower limit value LL_file of a size of a whole file that needs to be kept secret based on encryption in each format,
- Keyword KW_file representing information that needs to be kept secret based on encryption (for example, a sequence of characters and symbols that may contain a wildcard, which represents any character or symbol, and a regular expression in a predetermined format),
- Upper limit value UL_e_file and/or lower limit value LL_e_file of the sum of information amount that needs to be kept secret based on encryption in information contained in the file,

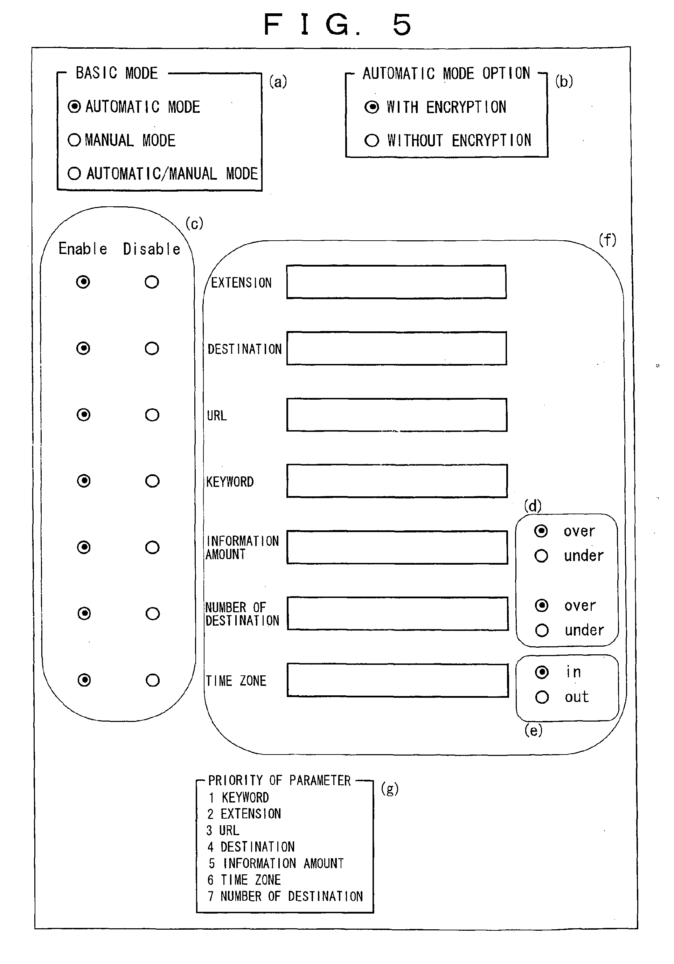

The mobile station 12 has a first man-machine interface function that relates to encryption for transmission information that the mobile station 12 itself transmits.
In the process of the first man-machine interface, the mobile station 12 properly identifies the following items (1) to (3) according to a GUI (Graphical User Interface) that has a form shown in Fig. 5 and stores these items to the register.

(1) Selection of one of automatic mode, manual mode, and automatic/manual mode that are methods for identifying transmission information to be encrypted (Fig. 5 (a)),
(2) Designation of permission for encryption in automatic mode and automatic/manual mode (Fig. 5 (b)),
(3) Following items with respect to extension of attached file, mail address, URL of accessed webpage, keyword, information amount, number of mail addresses, and time zone,

- Designation of permission of encryption and suspension of permission in automatic mode, manual mode, and automatic/manual mode (Fig. 5 (c)).
- Conditions that need to be satisfied to automatically identify an object to be encrypted (with respect to an item as a numeric value, designation of an upper limit value and a lower limit value of a range of the numeric value is included (Fig. 5 (d)) and with respect to an item that relates to a time zone, designation of the time zone or other than the time zone is included (Fig. 5 (e) (Fig. 5 (f)),
- Order of items identified as objects to be encrypted (Fig. 5 (g)).
  In each of the foregoing automatic mode, manual mode, and automatic/manual mode selected, the individual units operate as follows.

[When automatic mode has been selected]

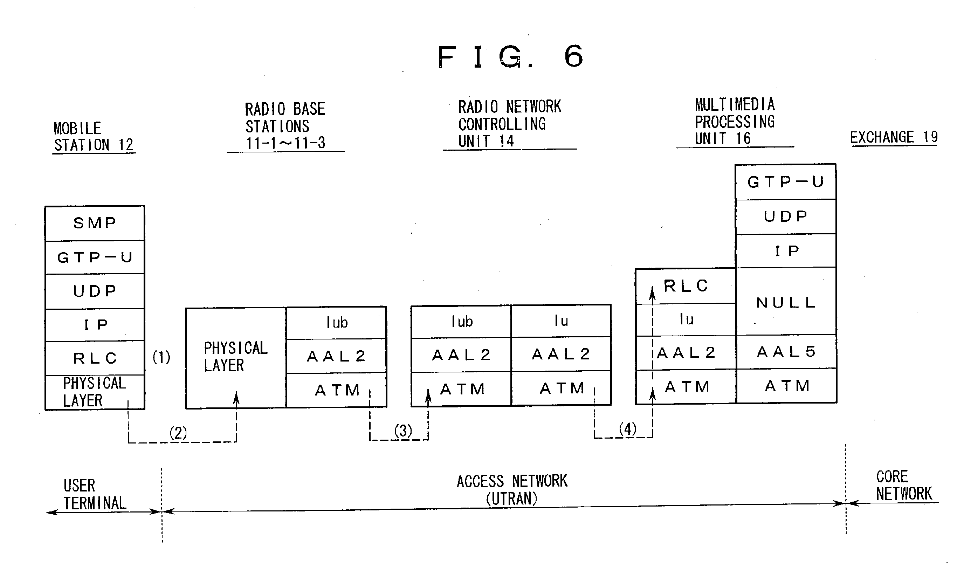

Since the mobile station 12 has terminated all layers, it can identify timing at which transmission information is transmitted according to a protocol such as SMTP (Simple Mail Transfer Protocol) (in this example, it is assumed that the contents of an attached file are contained as the contents of mail). For example, this timing is when a transmission operation for mail is detected. Instead, the mobile station 12 may detect mail that has been stored.
When the mobile station 1 has identified' such timing, the mobile station 1 2 performs the following processes (a) to (d) in an RLC layer shown in Fig. 6 (1).

(a) Processes with respect to address, title, and text of relevant mail

- The RLC layer identifies all portions that contain the foregoing keyword I<W_mail I in the address, title, and text and obtains sum $\Sigma$_mail of information amount of the identified portions (Fig. 3 (1)).
- The RLC layer determines whether the sum $\Sigma$_mail belongs to a range given by the upper limit value UL_mail and/or the lower limit value LL_mail (hereinafter, this determination is simply referred to as the first determination).
- The RLC layer determines whether the relevant address matches ADS_mail (hereinafter this determination is simply referred to as the second determination).
- The RLC layer determines whether the time belongs to the time zone P_mail (hereinafter this determination is simply referred to as the third determination).

- The RLC layer determines whether any website is being accessed and the address of the website matches the address URL_mail (hereinafter this determination is simply referred to as the fourth determination).

- The RLC layer performs predetermined logical operations for the first to fourth determination results (in this example, for simplicity, it is assumed that an AND operation for the first to fourth determination results is performed and hereinafter referred to as the first AND operation) (Fig. 3 (2)). Only when the result of the first logical operation is true, the RLC layer holds pointers that represent the all identified portions of all the address, title, and text and a storage area that stores the address (Fig. 3 (3)).

(b) Process with respect to attached file (performed only when relevant mail contains attached file)

- The RLC layer identifies all portions that contain the keyword KW_file in the contents of the attached file and obtains sum σ_file of the information amount of the identified portions (Fig. 3 (4)).

- The RLC layer determines whether the sum σ_file belongs to a range given by the upper limit value UL_e_file and/or the lower limit value LL_e_file (hereinafter, this determination is simply referred to as the fifth determination).

- The RLC layer determines whether the format of the attached file matches any of the format TYP_file (hereinafter, this determination is simply referred to as the sixth determination).

- The RLC layer determines whether the size of the relevant attached file belongs to a range given by the upper limit value UL_file and/or the lower limit value LL_file (hereinafter, this determination is simply referred to as the seventh determination).

- The RLC layer performs a predetermined logical operation for the fifth to seventh determination results (in this example, for simplicity, it is assumed that an AND operation for the fifth to seventh determination results is performed and hereinafter referred to as the second AND operation) (Fig. 3 (5)). Only when the result of the logical operation is true, the RLC layer holds pointers that represent individual storage areas of all identified portions of the contents of the attached file (Fig. 3 (6)).

(c) Generation of packet sequence corresponding to address, title, and text

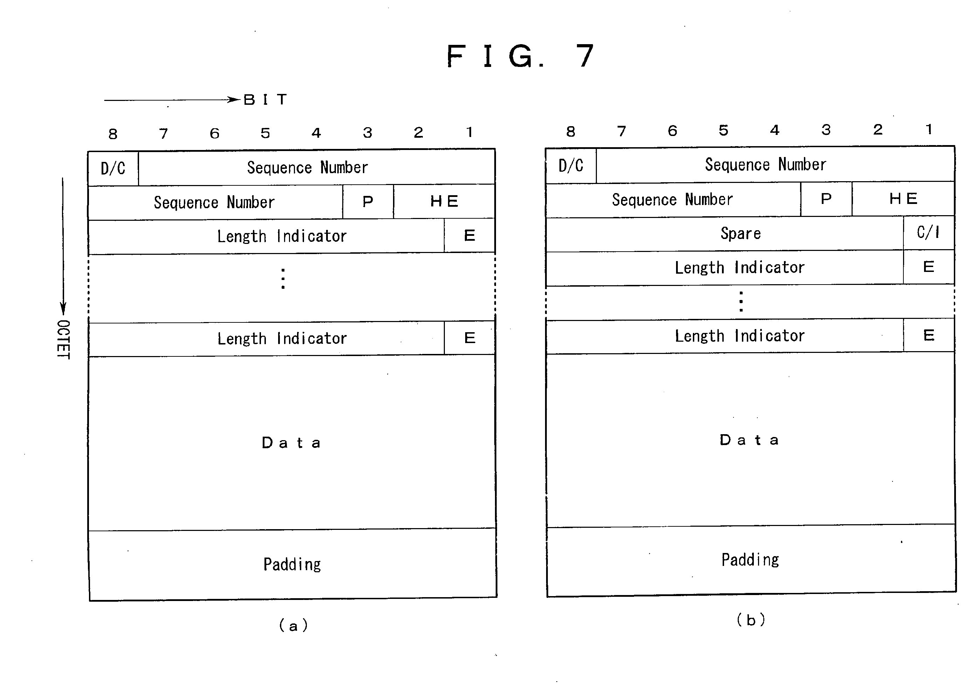

- When the result of the first AND operation is false, the address, title, and text of the relevant mail are non-encrypted, categorized and placed in a non-encrypted packet sequence that is different from a conventional packet shown in Fig. 7 (a) in that the former has a C/I field whose logic value is fixed to "0" as shown in Fig. 7 (b) (Fig. 3 (7)).

- In contrast, when the result of the second AND operation is true, the logical value of the C/I field of a non-encrypted packet that corresponds to one of pointers that have been held and that contains information to be encrypted of these non-encrypted packets is set to "1" and the address, title, and text are placed in an encrypted packet sequence that is different from the non-encrypted packet in that a payload is generated according to a predetermined encryption system (Fig. 3 (8)).

(d) Generation of packet sequence corresponding to contents of attached file

- When the result of the second AND operation is false, the contents of the relevant attached file are non-encrypted, categorized, and placed in a non-encrypted packet sequence of which the logical value of the C/I field is fixed to "0" (Fig. 3 (9)).

In contrast, when the result of the second AND operation is true, the logical value of the C/I field of a non-encrypted packet that corresponds to one of pointers that have been held and that contains information to be encrypted of non-encrypted packets is set to "1" and the contents of the attached file are placed in an encrypted packet sequence that is different from the non-encrypted packet in that a payload is generated according to a predetermined encryption system (Fig. 3 (10)).

In this example, for simplicity, it is assumed that the word length of the non-encrypted packet and the word length of the encrypted packet are matched by adjusting the word length of a padding field placed as a last field.

In the mobile station 1 2, the RLC layer transfers the generated packet sequence to a physical layer. The physical layer transmits the packet sequence to the radio base stations 11 -1 to 11 -3 (Fig. 2 (a), Fig. 3 (11), Fig. 6 (2)).

All or part of the radio base stations 11-1 to 11-3 receive the transmitted packet sequence (Fig. 2 (b)) and transfer the packet sequence as an ATM cell sequence to the radio network controlling unit 14 in the same manner as the related art (Fig. 2 (c), Fig. 6 (3)). The radio network controlling unit 14 reassembles the ATM cell sequence and generates a different ATM cell sequence (Fig. 4 (1)). The radio network controlling unit 14 transfers the different ATM cell sequence to the multimedia processing unit 16 (Fig. 2 (d), Fig. 6 (4)).

When the multimedia processing unit 16 has received the ATM cell sequence, the multimedia processing unit 16 performs the following processes.

- The multimedia processing unit 16 converts the relevant ATM cell sequence into a packet sequence in the RLC layer (composed of a non-encrypted packet sequence and an encrypted packet sequence) (Fig. 2 (e), Fig. 4 (2)).
- The multimedia processing unit 16 identifies all encrypted packets whose C/I field has been set to logical "1 " of packets contained in the packet sequence and individually decrypts the identified encrypted packets (according to the encryption system) and obtains non-encrypted packets (Fig. 4 (3)).
- After the multi-media processing unit 16 has converted these encrypted packets into non-encrypted packets, the multimedia processing unit 16 converts these packets into packets according to a desired layer (in this example, for simplicity, it is assumed that these packets are IP packets) (Fig. 4 (4)). The multimedia processing unit 16 transfers the IP packet sequence to the core network 18 (exchange 19) (Fig. 2 (f), Fig. 4 (5)).

In other words, the mobile station 12 automatically identifies portions (for example, all portions) that satisfy predetermined conditions such as contents of transmission information, attributes, background, and so forth, encrypts the transmission information as packets (each of which are transmitted in a period shorter than a period for a call or a communication session), and transmits the encrypted packets. When such a portion is present in two adjacent packets; they are encrypted together.

The radio network controlling unit 14 and the multimedia processing unit 16 operate in association with the radio base station that has received such transmission information. The radio network controlling unit 14 and the multi-media processing unit 16 transfer the decrypted transmission information to the core network 18 (exchange 19) without basically changing the internetwork interface system therewith.

Thus, according to this embodiment, information to be encrypted is identified without need to impose a complicated operation on the user who receives a communication service through the mobile station 12.

In addition, according to this embodiment, since hardware, process amount, and other resources applied to accomplish decryption in the multimedia processing unit 16 are not unnecessarily allocated to a particular call or a communication session for a long time, but properly shared by many calls, not only the cost is reduced, but the service quality is improved.

(When manual mode has been selected)

In the manual mode, the mobile station 12 performs the following processes instead of the processes (a) and (b) in the automatic mode without need to reference information stored in a register under the first man-machine interface.

- The mobile station 12 displays a portion that the user selects from the contents of mail as transmission information (including the contents of the attached file) according to the user's operation.
- In the second man-machine interface that allows such a portion to be displayed, when the user designates a portion to be encrypted, the mobile station 12 holds a unique pointer that represents the portion.

After the mobile station 12 has recognized that the second man-machine interface has been completed according to a user's command, with reference to the held pointers, the mobile station 12 generates a packet sequence in which address, title, and text are categorized and placed and generates a packet sequence in which the contents of the attached file are categorized and placed.

(A) Generation of packet sequence corresponding to address, title, and text

- The mobile station 12 generates a non-encrypted packet in which address, title, and text of the mail are non-encrypted, categorized, and placed.
- The mobile station 12 replaces only non-encrypted packets that correspond to individual pointers and that contain information to be encrypted with encrypted packets.

(B) Generation of packet sequence corresponding to contents of attached file

- The mobile station 12 generates non-encrypted packets in which contents of the relevant attached file are non-encrypted, categorized, and placed.
- The mobile station 12 replaces only non-encrypted packets that correspond to individual pointers and that contain information to be encrypted with encrypted packets.

In the mobile station 12, the RLC layer transfers the generated packet sequence to the physical layer. The physical layer transmits the packet sequence to the radio base stations 11-1 to 11 -3 (Fig. 2 (a), Fig. 6 (2)).

In other words, even if information to be encrypted of transmission information has not been assigned a condition for each item according to the first man-machine interface, information to be encrypted can be flexibly designated according to various user's needs under the second man-machine interface.

Thus, the operability and added value of the mobile station 12 are improved. In addition, the service quality is improved.

[When automatic/manual mode has been selected]

The mobile station 12 properly uses the first man-machine interface and the second man-machine interface in the automatic/manual mode according to the user's operation. The mobile station 12 holds pointers obtained in the first man-machine interface and pointers obtained in the second man-machine interface.

When the mobile station 12 has recognized that these first man-machine interface and second man-machine interface had been completed or they do not need to be started according to the user's operation, the mobile station 12 performs the processes (c), (d), (A), and (B) to generate a packet sequence corresponding to address, title, and text and generate a packet sequence corresponding to the contents of the attached file.

In the mobile station 12, the RLC layer transfers the generated packet sequences to the physical layer. The physical layer transmits these packet sequences to the radio base stations 11 -1 to 11-3 (Fig. 2 (a), Fig. 6 (2)).

In other words, information to be encrypted of transmission information is flexibly designated according to the first man-machine interfaced and the second man-machine interface.

Thus, in the automatic/manual mode, information that satisfies the foregoing conditions of various types of information to be encrypted is easily and securely designated under the first man-machine interfaced. On the other hand, information that does not satisfy these conditions or to which conditions cannot be easily set is designated under the second man-machine interface.

Thus, the operability and added value of the mobile station 12 are further improved. In addition, the service quality is improved. Moreover, secrecy of transmission information can be secured according to various user's needs.

[Second Embodiment]

Next, with reference to Fig. 1, Fig. 2, and Fig. 6, an operation of a second embodiment of the present invention will be described.

This embodiment features the following processes that the mobile station 1 2, the radio network controlling unit 14, and the multimedia processing unit 16 perform in association with each other.

The mobile station 12 identifies timing at which transmission of transmission information is started.

At this timing (Fig. 2 (1)), the mobile station 1 2 transmits charging rate request to all or part of the radio base stations 11-1 to 11-3 through a predetermined radio channel (it is assumed that the channel is designated under channel control) (Fig. 2 (2)).

The multimedia processing unit 16 identifies charging rate request transferred through the radio network controlling unit 14 (Fig. 2 (3)) and performs the following processes.

- The multimedia processing unit 16 transmits charging rate request to the core network 18 (exchange 19) (Fig. 2 (4)).
- The multimedia processing unit 16 receives charging rate r from the core network 18 (exchange 19) as a response to the request (Fig. 2 (5)) (in this example, for simplicity; it is assumed that the charging rate r is a charge per non-encrypted packet of transmission information in the case that the transmission information is not encrypted).
- The multimedia processing unit 16 computes charging rate R as a product of extra charging rate known as office data (in this example, it is assumed that the extra charging rate is the ratio of charging rate R as an extra rate designated for encrypted packet instead of non-encrypted packet and charging rate r) and charging rate r (Fig. 2 (6)).
- The multimedia processing unit 16 informs the mobile station 12 through the radio network controlling unit 14 of these charging rate r and charging rate R (Fig. 2 (7)).

The mobile station 12 obtains these informed charging rate r and charging rate R (Fig. 2 (8)) and performs the following processes (Fig. 2 (9)).

- The mobile station 12 obtains the total number t of non-encrypted packets in the case that all transmission information is transmitted as a non-encrypted packet sequence.
- The mobile station 12 obtains the total numbers T and t' of encrypted packets and non-encrypted packets in the case that the transmission information is transmitted as a packet sequence that contains some encrypted packets.
- The mobile station 12 computes two types of charging amounts c and C for transmission services of transmission information according to the following formulas.

$$c = r * t \ldots (1)$$

$$C = R * T + r * t' \ldots (2)$$

- The mobile station 12 presents these charging amounts c and C to the user and asks him or her whether to encrypt transmission information.
- The mobile station 12 performs the processes (a) to (d) of the first embodiment or equivalent processes (according to the applied mode) according to designation of whether to encrypt transmission information to generate a packet sequence (containing encrypted packets and/or non-encrypted packets in which all transmission information (that may contain an attached file) is categorized and placed.

- The RLC layer transfers the generated packet sequence, which may contain encrypted packets to the physical layer.

The physical layer transmits the packet sequence to the radio base stations 11-1 to 11-3 (Fig. 2 (10), Fig. 6 (2)).

All or part of the radio base stations 11-1 to 11-3 receive the transmitted packet sequence (Fig. 2 (11)) and transfer the packet sequence as a predetermined ATM cell sequence (Fig. 2 (12)) to the radio network controlling unit 14. In addition, the radio network controlling unit 14 reassembles the ATM cell sequence as a different ATM cell sequence and transfers it to the multimedia processing unit 16 (Fig. 2 (13)).

When the multimedia processing unit 16 has received the ATM cell sequence (Fig. 2 (14)), the multimedia processing unit 16 performs the following processes.

- The multimedia processing unit 16 converts the relevant ATM cell sequence into a packet sequence according to the RLC layer (configured as a non-encrypted packet sequence and/or an encrypted packet sequence.
- The multimedia processing unit 16 identifies all encrypted packets whose C/I field is set to logical "1" of packets of the packet sequence and decrypts the identified encrypted packets (according to the encryption system) to obtain non-encrypted packets (Fig. 2 (15)).
- The multimedia processing unit 16 converts the packet sequence of all these non-encrypted packets into packets according to a desired layer (for simplicity, it is assumed that these packets are IP packets) and transfers the IP packet sequence to the core network 18 (exchange 19) (Fig. 2 (16)).
- The multimedia processing unit 16 checks the number of non-encrypted packets and the number of encrypted packets denoted by $t\_a$ and $T\_a$, respectively, contained in the packet sequence according to the RLC layer and computes a charging amount $C\_a$ for these numbers $t\_a$ and $T\_a$, charging rate $r$, and charging rate $R$ according to the following formula (3) (Fig. 2 (17)).

$$C\_a = R * T\_a + r * t\_a \ldots (3)$$

- The multimedia processing unit 16 transfers charging information that includes the charging amount $C\_a$ to the core network 18 (exchange 19) (Fig. 2 (18)).

In other words, the charging amount is accurately obtained on the basis of both charging rate $r$ and charging rate $R$ that are obtained in association with the core network 18 without a change of the internetwork interface with the core network 18 and of which the mobile station 12 is informed and contents, attributes, and so forth of transmission information that is actually transmitted. In addition, secrecy of transmission information in a radio transmission region is assured in a mode that the user desires as long as he or she accepts the charging amount.

Thus, according to this embodiment, a portion that the user has designated and a portion that satisfies a condition that the user has designated of transmission information are encrypted with flexibility that satisfies various user's needs because he or she has a chance to determine whether to encrypt transmission information according to the charging amount in comparison with the case that the user does not have such a chance.

In addition, according to this embodiment, the core network 18 is asked for the charging rate.

However, such a charging rate may have been given as office data to the multimedia processing unit 16 or the radio network controlling unit 14. The office data may be obtained in association with the core network 18 and exchange 19 when they are operated.

In addition, according to this embodiment, the mobile station 12 is informed of the charging rate. The mobile station 12 computes the charging amount according to the charging rate.

However, the present invention is not limited to such a structure. Instead, the present invention may have the following structure.

- The radio network controlling unit 14 or the multimedia processing unit 16 computes the charging amount corresponding to the number of non-encrypted packets and the number of encrypted packets according to the charging information request issued by the mobile station 12 and informs the mobile station 12 of the computed charging amount.
- The core network 18 (exchange 19) is directly informed of the charging amount computed by the mobile station 12 through the radio network controlling unit 14 or the multimedia processing unit 16.

According to this embodiment, the user decides whether to encrypt transmission information by considering the charging amount.

Instead, the decision whether to encrypt transmission information may be automatically performed on the basis of the relationship of the charging amount and an upper limit value preset for the charging amount.

In addition, this decision may be performed in any association with the mobile station 12, the radio network controlling unit 14, and the multimedia processing unit 16.

The radio communication systems according to the forgoing embodiments can provide various services that include the following.

- Not only the name and title of the user who operates the mobile station 1 2, but data that contain private information such as user's bank account number, credit card number, telephone number, and address are included in objects to be encrypted.
- Digital data and other image information such as snap photos whose data size is larger than character information but whose information amount is substantially smaller than character information are excluded from objects to be encrypted.
  Thus, a communication vendor that provides communication services according to the present invention has the following advantages.
- The service quality can be improved.
- Users who receive these communication services can be aggressively acquired.
- Since resources for encryption and decryption are effectively shared, the running cost can be reduced.

In addition, according to the foregoing embodiments, transmission information is encrypted according to a common encryption system regardless of attributes and contents of information to be encrypted.

Instead, transmission information may be encrypted according to one of the following encryption systems:

Encryption systems adapting to contents, attributes, and other conditions of the transmission information identified as an object of encryption;
A single encryption system selected according to contents, attributes, and other conditions of information identified as an object of encryption and conforming to an item of the information to secure secrecy maximally.

In addition, according to the foregoing embodiments, both encrypted packets and non-encrypted packets have a C/I field for binary information that indicates whether they are encrypted packets.

Instead, these packets may not have the C/I field when an applied decryption system is obtained and a decision whether to decrypt information is made according to a format of information of a payload.

According to the foregoing embodiments, the present invention is applied to UTRAN (UMTS (Universal Mobile Telecommunication System) Terrestrial Radio Access Network) that provides a mobile communication service as an access network connected to the core network 18.

However, the present invention is not limited to such an access network. As long as secrecy of transmission information is required, the present invention can be applied to various radio communication systems and radio transmission systems regardless of applied multiple access system, zone configuration, frequency allocation, and channel allocation.

In addition, according to the foregoing embodiments, the present invention is applied to a radio transmission of desired transmission information from the mobile station 12 to the radio base stations 11-1 to 11-3 through an uplink.

However, the present invention is not limited to such an uplinl<. Instead, the present invention can be applied to a radio transmission of desired transmission information through a down link.

In addition, the present invention is not limited to the foregoing embodiments. Instead, various embodiments may be made in the scope of the present invention. Part or all of the structural units of the present invention may be modified in any manner.

*INDUSTRIAL APPLICABILITY*

According to a first aspect of the present invention, it is possible to properly allocate to and share with a plurality of calls and communication sessions hardware and other resources provided to a receiving end that decrypts information according to an encryption system, without allocating to a particular call or communication session for a long time.

According to a second aspect of the present invention, it is possible to simplify the structure of the radio apparatus and shorten transmission delay in comparison with a case that information not to be encrypted and an encryption result are separately radio-transmitted.

According to a third aspect of the present invention, it is possible to achieve desired secrecy, transmission quality, and transmission rate regardless of contents and attributes of information to be encrypted in comparison with the case that a fixed encryption system is applied.

According to a fourth aspect of the present invention, an encryption process is simplified without a tradeoff of secrecy.

According to fifth and sixth aspects of the present invention, various contents and attributes of transmission information can be flexibly handled and high transmission quality is maintained.

According to a seventh aspect of the present invention, it is possible to automatically limit an increase of a charging amount for radio-transmitted transmission information that is mostly encrypted as long as an upper limit value of the charging amount is properly set.

According to an eighth aspect of the present invention, it is possible to properly limit an increase of a charging amount for radio-transmitting mostly encrypted transmission information of various types of contents and attributes.

According to ninth and tenth aspects of the present invention, it is possible to set a limitation of a charging amount at a transmitting end and a receiving end of transmission information under various function and load distributions.

According to an eleventh aspect of the present invention, it is possible to prevent a change of an encryption system in a radio transmission region and a change of a charging system according to the encryption system from affecting the structure of an access network.

According to a twelfth aspect of the present invention, it is possible to secure compatibility with the core network without a change of a basic structure as long as the charging system is identified.

According to a thirteenth aspect of the present invention, it is possible to properly set a charging amount according to encryption unique to a radio transmission zone under various function and load distributions between a transmitting end and a receiving end.

Accordingly, a radio communication system and a radio transmission system to which the present invention is applied can reduce the cost and improve service quality.

**Claims**

1. A radio apparatus, comprising:

   an encryption object identifying unit which identifies, from transmission information, a portion whose content and/or attribute satisfies predetermined conditions; and
   a transmitting unit which encrypts the identified portion of said transmission information or information containing the identified portion and radio-transmits a result of the encryption.

2. The radio apparatus as set forth in claim 1, wherein said transmitting unit radio-transmits a rest of said transmission information other than the portion or the information containing the portion, along with the result of the encryption.

3. The radio apparatus as set forth in claim 1, wherein said transmitting unit applies, for the encryption, an encryption system appropriate for each of said conditions.

4. The radio apparatus as set forth in claim 1, wherein said transmitting unit applies, for the encryption, a same encryption system which satisfies all of said predetermined conditions and accomplishes maximum secrecy.

5. The radio apparatus as set forth in claim 1, wherein said transmitting unit radio-transmits the encryption result as a packet sequence which contains information used for identifying a decryption system appropriate for the encryption system.

6. The radio apparatus as set forth in claim 1, further comprising
   a man-machine interface unit which man-machine interfaces to set said predetermined conditions.

7. The radio apparatus as set forth in claim 1, further comprising:

   a charging information obtaining unit which obtains one of a charging system and an extra charge of a charging rate, the charging system being for transmitting the portion or the information containing the portion which is radio-transmitted from a receiving end receiving the encryption result, the charging rate being applied for radio-transmitting the portion or a set of portions according to the charging system; and
   a charging amount computing unit which computes a charging amount for the radio transmission according to said charging system or said extra charge and to contents and/or attributes of said transmission information, wherein
   said transmitting unit radio-transmits said transmission information instead of the encryption result when the charging amount exceeds a predetermined upper limit value.

8. The radio apparatus as set forth in claim 7, further comprising:

   an encryption permission designating unit which man-machine interfaces to notify the charging amount and designate permission/non-permission of the encryption at the charging amount, wherein
   when the encryption is not permitted, said transmitting unit radio-transmits said transmission information instead of the encryption result.

9. The radio apparatus as set forth in claim 7, wherein when said charging amount exceeds the predetermined upper limit value, said transmitting unit transmits, to said radio transmission path, a response indicating the charging amount's exceeding.

10. The radio apparatus as set forth in claim 8, wherein when the encryption is not permitted, said transmitting unit transmits a response indicating the non-permission of the encryption to said radio transmission path.

11. A radio apparatus, comprising:

   a receiving unit which receives a packet sequence through a radio transmission path having information placed in a payload and entirely or partially encrypted, the packet sequence being able to contain additional information applied for decryption of the information; and
   an internetwork interfacing unit which restores transmission information contained in said pack-

et sequence and transfers charging information to a core network along with the restored transmission information, the charging information being higher than a sum of products of a ratio of the encrypted information and an extra charge of a charging rate appropriate for an applied encryption system.

**12.** The radio apparatus as set forth in claim 11, wherein said internetwork interfacing unit obtains said charging information and said charging rate according to a charging system appropriate for said core network.

**13.** The radio apparatus as set forth in claim 1 2, further comprising:

an informing unit which radio-transmits said charging system or extra charge of said charging rate to a transmitting end which transmits said packet sequence, wherein
said internetwork interfacing unit cancels the extra charge when receiving a response to the radio-transmitted charging system or extra charge of said charging rate, the response being transmitted from said transmitting end through said receiving unit.

# FIG. 1

EP 1 679 922 A1

F I G. 2

# F I G. 3

```
                    ┌─────────┐
                    │  START  │
                    └────┬────┘
                         │
      ┌──────────────────┤
      │                  ▼
      │         ╱─────────────────────╲
  NO  │        ╱   TIMING AT WHICH      ╲
◄─────┤        ╲ TRANSMISSION INFORMATION╱
      │         ╲    IS TRANSMITTED?    ╱
      │          ╲───────────┬─────────╱
      │                 YES  │    (1)
      │       ┌──────────────▼──────────────┐
      │       │ IDENTIFIY ALL PORTIONS THAT │
      │       │ CONTAIN KEYWORD IN TEXT OF  │
      │       │ MAIL ETC, AND OBTAIN SUM OF │
      │       │ INFORMATION AMOUNT OF THE   │
      │       │ IDENTIFIED PORTIONS         │
      │       └──────────────┬──────────────┘
      │                      │           (2)
      │       ┌──────────────▼──────────────┐
      │       │ PERFORM FIRST AND OPERATION │
      │       └──────────────┬──────────────┘
      │   NO                 │
      │  ◄──╱────────────────▼──────────╲
      │    ╲    RESULT : TRUE?          ╱
      │     ╲─────────────┬────────────╱
      │                YES│      (3)
      │       ┌───────────▼─────────────┐
      │       │ HOLD POINTER            │
      │       └───────────┬─────────────┘
      │                   │            (4)
      │       ┌───────────▼─────────────────┐
      │       │ IDENTIFIY ALL PORTIONS THAT │
      │       │ CONTAIN KEYWORD IN CONTENTS OF
      │       │ ATTACHED FILE, AND OBTAIN SUM
      │       │ OF INFORMATION AMOUNT OF THE │
      │       │ IDENTIFIED PORTIONS         │
      │       └───────────┬─────────────────┘
      │                   │              (5)
      │       ┌───────────▼──────────────────┐
      │       │ PERFORM SECOND AND OPERATION │
      │       └───────────┬──────────────────┘
      │   NO              │
      │  ◄──╱─────────────▼────────╲
      │    ╲  RESULT : TRUE?       ╱
      │     ╲──────────┬──────────╱
      │             YES│     (6)
      │       ┌────────▼────────┐
      └───────│ HOLD POINTER    │
              └────────┬────────┘
```

```
                                          (7), (8)
        ┌─────────────────────────────────────┐
        │ CONVERT ADDRESS, TITLE, AND         │
        │ TEXT OF MAIL INTO PACKET SE-        │
        │ QUENCE SUITABLE FOR RESULT OF       │
        │ FIRST AND OPERATION                 │
        └──────────────────┬──────────────────┘
                           │          (9), (10)
        ┌──────────────────▼──────────────────┐
        │ CONVERT CONTENTS OF ATTACHED        │
        │ FILE INTO PACKET SEQUENCE           │
        │ SUITABLE FOR RESULT OF              │
        │ SECOND AND OPERATION                │
        └──────────────────┬──────────────────┘
                           │              (11)
        ┌──────────────────▼──────────────────┐
        │ TRANSFER PACKET SEQUENCE TO         │
        │ PHYSICAL LAYER                      │
        └──────────────────┬──────────────────┘
                           │
                      ┌────▼────┐
                      │   END   │
                      └─────────┘
```

17

# F I G . 4

```
                    ┌─────────┐
                    │  START  │
                    └────┬────┘
                         │
      ┌──────────────────┤
      │                  ▼
      │          ╱────────────────────╲
   NO │         ╱   PACKET SEQUENCE     ╲
      └────────╱     IS RECEIVED  ?      ╲
               ╲                         ╱
                ╲───────────┬───────────╱
                            │ YES
                            ▼
        ┌─────────────────────────────────────┐
        │ CONVERT PACKET SEQUENCE INTO ATM     │ (1)
        │ CELL SEQUENCE                        │
        └──────────────────┬──────────────────┘
                           ▼
        ┌─────────────────────────────────────┐
        │ CONVERT ATM CELL SEQUENCE INTO       │ (2)
        │ PACKET SEQUENCE IN RLC LAYER         │
        └──────────────────┬──────────────────┘
                           ▼
        ┌─────────────────────────────────────┐
        │ CONVERT ALL ENCRYPTED PACKETS        │ (3)
        │ CONTAINED IN PACKET SEQUENCE INTO    │
        │ NON-ENCRYPTED PACKETS                │
        └──────────────────┬──────────────────┘
                           ▼
        ┌─────────────────────────────────────┐
        │ CONVERT NON-ENCRYPTED PACKET         │ (4)
        │ SEQUENCE INTO IP PACKET  SEQUENCE    │
        └──────────────────┬──────────────────┘
                           ▼
        ┌─────────────────────────────────────┐
        │ TRANSFER IP PACKET SEQUENCE TO       │ (5)
        │ CORE NETWORK                         │
        └──────────────────┬──────────────────┘
                           ▼
                    ┌─────────┐
                    │   END   │
                    └─────────┘
```

# F I G. 5

BASIC MODE ──────── (a)

◉ AUTOMATIC MODE

○ MANUAL MODE

○ AUTOMATIC/MANUAL MODE

AUTOMATIC MODE OPTION ─┐ (b)

◉ WITH ENCRYPTION

○ WITHOUT ENCRYPTION

(c)

Enable  Disable

| | | (f) |
|---|---|---|
| ◉ | ○ | EXTENSION [ ] |
| ◉ | ○ | DESTINATION [ ] |
| ◉ | ○ | URL [ ] |
| ◉ | ○ | KEYWORD [ ] |
| ◉ | ○ | INFORMATION AMOUNT [ ] |
| ◉ | ○ | NUMBER OF DESTINATION [ ] |
| ◉ | ○ | TIME ZONE [ ] |

(d)

◉ over
○ under

◉ over
○ under

◉ in
○ out

(e)

PRIORITY OF PARAMETER ─┐ (g)
1 KEYWORD
2 EXTENSION
3 URL
4 DESTINATION
5 INFORMATION AMOUNT
6 TIME ZONE
7 NUMBER OF DESTINATION

# F I G. 6

MOBILE STATION 12

RADIO BASE STATIONS 11-1～11-3

RADIO NETWORK CONTROLLING UNIT 14

MULTIMEDIA PROCESSING UNIT 16

EXCHANGE 19

| SMP |
| GTP-U |
| UDP |
| IP |
| RLC |
| PHYSICAL LAYER |

(1)

(2)

| Iub |
| AAL 2 |
| ATM |

| PHYSICAL LAYER |

(3)

| Iub |
| AAL 2 |
| ATM |

| Iu |
| AAL 2 |
| ATM |

(4)

| GTP-U |
| UDP |
| IP |
| NULL |
| AAL 5 |
| ATM |

| RLC |
| Iu |
| AAL 2 |
| ATM |

USER TERMINAL

ACCESS NETWORK (UTRAN)

CORE NETWORK

20

# FIG. 7

(a)

(b)

EP 1 679 922 A1

## INTERNATIONAL SEARCH REPORT

International application No.

PCT/JP03/13871

A. CLASSIFICATION OF SUBJECT MATTER
Int.Cl⁷ H04Q7/38

According to International Patent Classification (IPC) or to both national classification and IPC

B. FIELDS SEARCHED

Minimum documentation searched (classification system followed by classification symbols)
Int.Cl⁷ H04B7/24-7/26, H04Q7/00-7/38

Documentation searched other than minimum documentation to the extent that such documents are included in the fields searched
Jitsuyo Shinan Koho          1922-1996  Toroku Jitsuyo Shinan Koho    1994-2004
Kokai Jitsuyo Shinan Koho    1971-2004  Jitsuyo Shinan Toroku Koho    1996-2004

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-23420 A  (NEC Corp.),<br>24 January, 2003 (24.01.03),<br>Par. Nos. [0040], [0041], [0065] to [0089]<br>& US 2002/0138635 A1 | 1-13 |
| Y | JP 5-244150 A  (Hirokazu OKANO),<br>21 September, 1993 (21.09.93),<br>Claim 1; Par. Nos. [0009] to [0012]<br>& US 5504818 A | 1-10 |
| Y | JP 1-98032 A  (Nippon Telegraph And Telephone Corp.),<br>17 April, 1989 (17.04.89),<br>Claims; page 2, lower right column, line 4 to page 3, upper left column, line 19<br>(Family: none) | 1-10 |

☒  Further documents are listed in the continuation of Box C.      ☐  See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>29 January, 2004 (29.01.04) | Date of mailing of the international search report<br>17 February, 2004 (17.02.04) |
|---|---|
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/13871

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-46329 A (Canon Inc.),<br>14 February, 1997 (14.02.97),<br>Par. Nos. [0024] to [0030], [0040], [0041],<br>[0054], [0055]<br>& EP 0751646 A2          & AU 9656198 A<br>& CN 2179971 A          & US 6078663 A<br>& CN 1142718 A          & CA 2354099 A1<br>& SG 94690 A1 | 7-13 |
| A | JP 2002-520923 A (Nokia Networks Oy.),<br>09 July, 2002 (09.07.02),<br>& WO 00/02406 A2          & FI 9801565 A<br>& AU 9949121 A          & GB 2355157 A | 1-13 |

Form PCT/ISA/210 (continuation of second sheet) (July 1998)